# EUROPEAN PATENT APPLICATION

(11) **EP 4 549 765 A1**
(43) Date of publication of application: **07.05.2025**
(21) Application number: 24210056.8
(22) Date of filing: 31.10.2024
(51) Int. Cl.: F16C 19/18, F16C 33/78, F16C 33/80

(54) **A WHEEL BEARING ASSEMBLY**

(30) Priority: 31.10.2023 KR 20230148606
(71) Applicant: Iljin Global Co., Ltd., Seoul 06157 (KR)
(72) Inventor: KIM, Yongwon, 14113 Anyang-si (KR); JIN, Seongkyu, 52716 Jinju-si (KR)
(74) Representative: AOMB Polska Sp. z.o.o.

(57) **Abstract**

Wheel bearing assembly including a sealing device (101), which includes a first slinger (120) into which the hub (10) is inserted, a second slinger (140) which is inserted into the outer ring, and a seal body (130) which includes one or more seal lips being in contact with the first slinger. A first gap and a second gap of labyrinth are formed between the first slinger and the outer ring, and the seal body further includes a first seal lip formed on the radial outside of the seal lips to form a third gap between the first seal lip and the first slinger.

## Description

### BACKGROUND OF THE INVENTION

### Field of the Invention

The present invention relates to a wheel bearing assembly and, more specifically, to a wheel bearing assembly having excellent sealing performance.

### Background Art

In general, a bearing is a mechanical component mounted between a rotating element and a non-rotating element to facilitate the rotation of the rotating element. Currently, various types of bearings, such as ball bearings, tapered roller bearings, and needle roller bearings, are in use.

A wheel bearing, as a type of the bearings, supports a wheel, which is the rotating element, to rotate relative to a vehicle body which is the non-rotating element. The wheel bearing includes an inner ring (and/or hub) connected to either the wheel or the vehicle body, an outer ring connected to the other, and rolling elements interposed between the outer and inner rings.

Since the wheel bearing is fundamentally mounted on the vehicle's wheel, the wheel bearing is exposed to foreign substances such as dust and moisture. When the foreign substances infiltrate the interior of the wheel bearing, they can cause noise and vibration during operation of the wheel bearing and shorten the lifespan of the wheel bearing. Therefore, sealing devices are installed at one or both ends of the wheel bearing to prevent the intrusion of foreign substances.

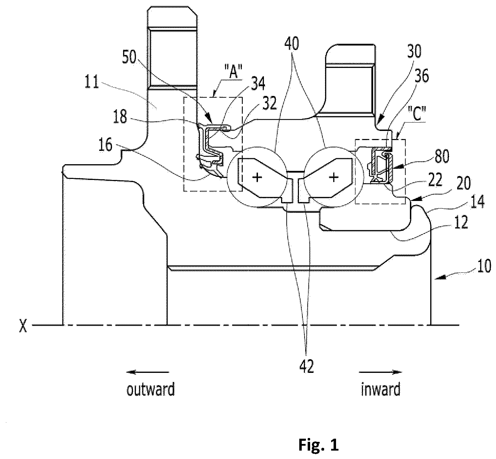

FIG. 1 is a half cross-sectional view of a conventional wheel bearing assembly. As illustrated in FIG. 1, the wheel bearing assembly includes a hub 10, an outer ring 30, and rolling elements 40. The hub 10 is coupled to the wheel (not illustrated). Moreover, the hub 10 includes a flange 11 to be coupled with the wheel. An inner ring 20 is provided on the hub 10.

The flange 11 can be formed in a disc shape extending in the circumferential direction of the hub 10. The outer ring 30 is formed to surround the outer surface of the hub 10, and the outer surface of the hub 10 and the inner surface of the outer ring 30 are spaced apart. Additionally, the outer ring 30 is coupled to the vehicle body (not illustrated).

The rolling elements 40 are aligned between the track of the hub 10 and the track of the outer ring 30, which are spaced apart from each other. Multiple rolling elements 40 are provided. Furthermore, to facilitate the smooth operation of the wheel bearing, grease can be filled in the space where the rolling elements 40 are interposed. In FIG. 1, reference numeral 42 indicates a cage functioning to maintain a circumferential interval of the rolling elements.

In general, the hub and the inner ring of the wheel bearing assembly are connected to either the wheel or the vehicle body, and the outer ring is connected to the other of the wheel or the vehicle body, which is not connected to the hub and the inner ring. Meanwhile, FIG. 1 illustrates the outer ring 30 connected to the vehicle body (not illustrated) and the hub 10 connected to the wheel (not illustrated), but is not limited thereto.

The wheel bearing assembly includes sealing devices 50 and 80. The sealing devices 50 and 80 prevent foreign substances from entering the space where the rolling elements 40 are interposed, and also prevent the leakage of grease.

The sealing device 50 provided at an outward opening formed between the hub 10 and the outer ring 30 includes a slinger into which the outer ring 30 adjacent to the hub 10 is press-fitted, and a plurality of lips being in contact with the hub 10 while wrapping around the slinger. The outer ring is inserted into the slinger such that an outer circumferential surface 32 and a cross-sectional face 34 of the outer ring is in contact with the slinger. Some of the plurality of lips are in contact with a bent part 16 of the hub 10, and others are in contact with a concave part 18 of the hub 10.

The sealing device 80 provided at an inward opening formed between the hub 10 and the outer ring 30 is inserted between an inner circumferential surface 36 of the outer ring 30 and an outer circumferential surface 22 of the inner ring 20 of the hub 10. Reference numeral 12 indicates an outer circumferential surface of the hub 10 into which the inner ring 20 is inserted, and 14 indicates an orbital forming part.

The sealing performance of the sealing device 50 and the amount of drag torques generated by the friction between the rotating element and the non-rotating element are proportionally related to each other, so when the sealing performance is improved, it tends to increase the drag torque, and when the drag torques are reduced, it tends to decrease the sealing performance. Accordingly, a labyrinth seal structure is applied to the contact sealing devices due to the demand for low-torque and high-sealing performance. However, the labyrinth seal structure cannot effectively prevent the intrusion of foreign substances such as moisture.

### PATENT LITERATURE

### Patent Documents

Patent Document 1: Korean Patent Publication No. 10-2012-0114818

### SUMMARY OF THE INVENTION

Accordingly, the present invention has been made to solve the above-mentioned problems occurring in the prior arts, and it is an objective of the present invention to provide a wheel bearing assembly having a labyrinth structure with enhanced sealing performance.

To accomplish the above object, according to the present invention, there is provided a wheel bearing assembly including a sealing device which includes a first slinger into which the hub is inserted, a second slinger which is inserted into the outer ring, and a seal body which includes one or more seal lips being in contact with the first slinger.

A first gap and a second gap of labyrinth are formed between the first slinger and the outer ring, and the seal body further includes a first seal lip formed on the radial outside of the seal lips to form a third gap between the first seal lip and the first slinger.

Moreover, foreign substances pass sequentially through the first gap, the second gap, and the third gap, wherein the first gap is formed axially, the second gap is formed radially, and the third gap is formed axially.

Furthermore, the foreign substances flow axially inward and pass through the first gap, flows radially inward and pass through the second gap, and then, flow axially outward and pass through the third gap to reach the seal lip.

Additionally, the first slinger includes a first insertion part into which a hub outer diameter part is inserted, a first slinger extension part provided on the outside of the first insertion part and extending radially outward, a second slinger slope part inclinedly extending to direct inward from the first slinger extension part and radially outward, and a slinger extension part extending inward from the second slinger slope part.

The second slinger includes a second insertion part inserted into a first outer ring inner diameter part, and a second slinger extension part extending radially inward from the outside of the second insertion part and spaced inwardly from the first slinger extension part to face the first slinger extension.

The seal body is coupled to the second slinger, the one or more seal lips protrude outward toward the first slinger, and the first seal lip extends outward from the radial outside of the seal lips and then extends radially outward to form the third gap between an end thereof and the slinger extension part.

In addition, the outer ring includes a first outer ring inner diameter part into which the second slinger is inserted, an outer ring jaw part formed outwardly from the first outer ring inner diameter part, and a second outer ring inner diameter part being larger in diameter than the first outer ring inner diameter part on the outside of the outer ring jaw part.

The first slinger includes a slinger extension part formed radially outward.

The first gap is formed between the second outer ring inner diameter part and an outer diameter part of the slinger extension part, and the second gap is formed between the outer ring jaw part and the inner end of the slinger extension part, so the first gap and the second gap form a curved gap.

Moreover, the flange includes a flange slope part directing inward at a position facing the outer end of the outer ring and inclined radially outward, a flange extension part extending radially inward from the flange slope part, and a flange insertion part protruding inward with a step formed radially inward of the flange extension part.

The first slinger extension is in close contact with the flange insertion part.

The second slinger slope part is located radially inward of the flange slope part, and the first slinger extension part is spaced axially inward from the flange extension.

Furthermore, the inner end of the slinger extension is positioned axially inward from the end of the first seal lip.

Additionally, a radial extension line of the outer end of the outer ring is located at a convex curved part formed between the second slinger slope part and the slinger extension.

In addition, a first outer ring slope part which is inclined radially inward and axially outward is provided between the first outer ring inner diameter part and the outer ring jaw part of the outer ring.

Moreover, an interval of the first gap is smaller than an interval of the second gap and an interval of the third gap.

Furthermore, the interval of the second gap is smaller than the interval of the third gap.

Additionally, the interval of the first gap is smaller than the interval of the second gap and the interval of the second gap is smaller than the interval of the third gap.

The interval of the first gap ranges from 0.4 to 0.8 mm, the interval of the second gap ranges from 0.5 to 0.9 mm, and the interval of the third gap ranges from 0.6 to 1.0 mm.

In addition, the ratio of the thickness of the second outer ring inner diameter part from the outer circumferential surface of the outer ring to the thickness of the first outer ring inner diameter part from the outer circumferential surface of the outer ring is 0.25 ≤ G/F ≤ 0.7.

As described above, the wheel bearing assembly according to the present invention has the labyrinth structure, which includes the first space formed between the first slinger of the sealing device and the flange, gaps between the first slinger, the outer ring, and the seal body, and the second space formed between the first slinger and the seal body, thereby preventing foreign substances from entering from outside, and enhancing sealing performance without an increase in torque.

### BRIEF DESCRIPTION OF THE DRAWINGS

FIG. 1 is a half cross-sectional view of a conventional wheel bearing assembly.
FIG. 2 is a partially sectional view of a wheel bearing assembly according to the present invention, which corresponds to the part "A" of FIG. 1.
FIG. 3 is an enlarged view of the part "A" of FIG. 2.

### DETAILED DESCRIPTION OF THE PREFERRED EMBODIMENT

All technical and scientific terms used in the description of the present invention, unless otherwise defined, are to be understood as commonly understood by those of ordinary skill in the art to which the present disclosure belongs. All terms used in the present disclosure are selected for the purpose of further clarifying the present disclosure and not intended to limit the scope of the present invention as disclosed.

Expressions such as "comprising," "having," and "including" used in the description of the present invention are to be understood as open-ended terms that imply the possibility of including other embodiments, unless otherwise specified in the phrases or sentences where such expressions are included.

Expressions in the singular form used in the description of the present invention are intended to include the plural form as well, unless otherwise specified, and are equally applied to the expressions in the singular form described in the claims.

Expressions such as "first," "second," etc., used in the description of the present invention are used to distinguish a plurality of components and do not limit the order or importance of the components.

When it is mentioned in the description of the present invention that one component is "connected" or "coupled" to another component, it is to be understood that the one component can be directly connected or coupled to the other component, or be connected or coupled via another intermediate component.

Hereinafter, a wheel bearing assembly of the present invention will be described in detail with reference to the attached drawings.

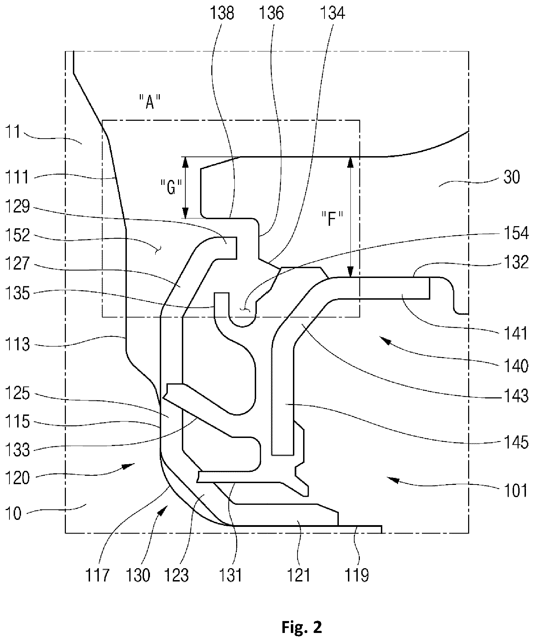

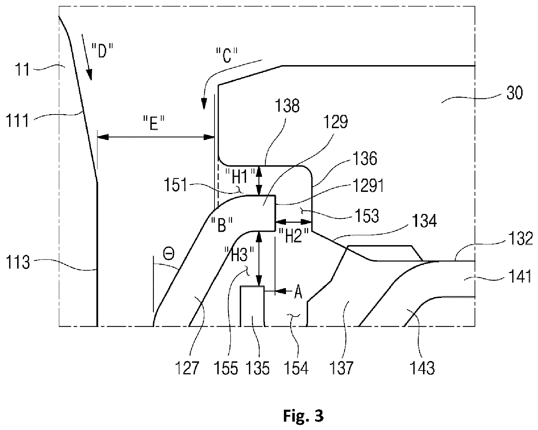

FIG. 2 is a partially sectional view of a wheel bearing assembly according to the present invention, which corresponds to the part "A" of FIG. 1, and FIG. 3 is an enlarged view of the part "A" of FIG. 2.

In the following description, the horizontal direction in FIG. 2 is referred to as the axial direction, the left side is referred to as the outward side, the right side as the inward side, and the vertical direction as the radial direction.

In describing the wheel bearing assembly according to the present invention, descriptions of the content described in the conventional technology are omitted, and only the characteristic configurations of the wheel bearing assembly according to the present invention are described.

FIG. 2 illustrates a portion of the wheel bearing assembly according to the present invention corresponding to the part "A" of FIG. 1, and rolling elements are omitted in the drawing.

As illustrated in FIG. 2, the wheel bearing assembly includes a hub 10, an outer ring 30, a plurality of rolling elements aligned between the outer ring 30 and the hub 10 in the circumferential direction, and a sealing device 101 provided at an outward opening formed between the outer ring 30 and the hub 10.

The hub 10 is formed cylindrically. One or two inner rings (not illustrated) can be further provided on the outer diameter of the hub 10 axially inward of the hub 10. If one inner ring is provided, an inner ring track is formed on the hub 10 and the outer circumferential surface of the inner ring, and if two inner rings are provided, an inner ring track is formed on the outer circumferential surface of the inner rings.

A flange 11 extending radially is provided on the axial outward of the hub 10. The flange 11 is formed in a disc shape extending in the circumferential direction of the hub 10. The hub 10 is coupled to a wheel (not illustrated) by the flange 11.

On the axial inward face of the flange 11, a flange slope part 111, a flange extension part 113, a flange insertion part 115, and a hub outer diameter part 119 are formed from the radial outside.

The flange slope part 111 is formed at a position facing the axial outward end of the outer ring 30 from the radial outside of the flange 11. The flange slope part 111 is inclined axially inward and radially outward.

The flange extension part 113 is located radially inward of the flange slope part 111 and extends radially inward from the flange slope part 111.

The flange insertion part 115 is located radially inward of the flange extension part 113. The flange insertion part 115 protrudes axially inward with a step from the radial inside of the flange extension part 113.

The hub outer diameter part 119 is located radially inward of the flange insertion part 115. The hub outer diameter part 119 extends axially inward from the radial inside of the flange insertion part 115. The hub outer diameter part 119 is formed cylindrically.

A hub concave part 117 may be formed between the hub outer diameter part 119 and the flange insertion part 115 in the radial direction. The hub concave part 117 is formed concavely between the hub outer diameter part 119 and the flange insertion part 115 axially inward and radially outward.

The outer ring 30 is formed in a ring shape to surround the outer circumferential surface of the hub 10. The outer ring 30 is radially spaced from the hub 10. The inner circumferential surface of the outer ring 30 is spaced from the outer circumferential surface of the hub 10. The outer ring 30 is coupled to a vehicle body (not illustrated).

The outer ring 30 includes a first outer ring inner diameter part 132, an outer ring jaw part 136, an outer outer ring slope part 134, and a second outer ring inner diameter part 138 formed axially outward.

The first outer ring inner diameter part 132 is formed cylindrically. The first outer ring inner diameter part 132 is radially spaced from the hub outer diameter part 119 and is provided facing the hub outer diameter part 119. The second slinger 140 is press-fitted and fixed into the first outer ring inner diameter part 132.

The outer ring jaw part 136 is formed on the axial and radial outer side of the first outer ring inner diameter part 132 and is formed extending axially outward.

The outer ring slope part 134 is formed between the first outer ring inner diameter part 132 and the outer ring jaw part 136. The outer ring slope part 134 is formed inclinedly to direct radially inward and axially outward between the first outer ring inner diameter part 132 and the outer ring jaw part 136.

The second outer ring inner diameter part 138 is formed on the axial outside of the outer ring jaw part 136. The second outer ring inner diameter part 138 is formed cylindrically. The second outer ring inner diameter part 138 is larger in diameter than the first outer ring inner diameter part 132.

As illustrated in FIG. 2, the ratio of the thickness G of the second outer ring inner diameter part 138 formed on the axial outside of the outer ring 30 from the outer circumferential surface of the outer ring 30 to the thickness F of the first outer ring inner diameter part 132 is in the range of 0.25 ≤ G/F ≤ 0.7.

If the ratio (G/F) of the thickness G of the second outer ring inner diameter part 138 to the thickness F of the first outer ring inner diameter part 132 is less than 0.25, the thickness G of the second outer ring inner diameter part 138 is formed too thin, so the stiffness and strength of the axial outer end of the outer ring 30 are deteriorated.

Additionally, the end face on the axial outside of the outer ring 30, i.e., the end face on the axial outside of the second outer ring inner diameter part 138, serves as the reference surface (backing plate) for turning the outer diameter surface and the inner diameter surface of the axial outside of the outer ring 30 and the flange surface. So, it is necessary to secure a minimum thickness G of the second outer ring inner diameter part 138. If the thickness G of the second outer ring inner diameter part 138 becomes smaller than a certain dimension, it is impossible to perform smooth turning.

Additionally, as an interval H1 of a first gap 151, which will be described later, widens, foreign substances entering along the axial outer circumferential surface of the outer ring 30 and the axial inner surface of the hub flange 11 can more easily enter the first gap 151, which is a radial labyrinth structure, leading to a decrease in sealing performance.

Additionally, if the ratio (G/F) of the thickness G of the second outer ring inner diameter part 138 to the thickness F of the first outer ring inner diameter part 132 is greater than 0.7, the cross-sectional area of the outer ring jaw part 136 facing an inner end 129 of the slinger extension part 129 substantially disappears, so the second gap 155 which is the axial labyrinth structure of the second gap 155 is eliminated and the overall labyrinth sections are reduced and sealing performance is decreased due to the disappearance of the second gap 155.

The rolling elements are circumferentially arranged between the inner ring track of the hub 10 and the outer ring track of the outer ring 30 which are spaced radially, and are provided in multiple numbers. Grease can be filled in the space where the rolling elements 40 are interposed.

The sealing device 101 is provided at the axially outward opening formed between the outer ring 30 and the hub 10. The sealing device 101 includes a first slinger 120, a second slinger 140, and a seal body 130.

The first slinger 120 is provided in a ring shape. The first slinger 120 is made of a metal material. The hub 10 is inserted into the first slinger 120, so the first slinger 120 is provided on the hub 10.

The first slinger 120 includes a first insertion part 121, a first slinger extension part 125, a first slinger slope part 123, a second slinger slope part 127, and a slinger extension part 129.

The first insertion part 121 is formed cylindrically. The hub outer diameter part 119 is press-fitted into the first insertion part 121.

The first slinger extension part 125 is provided on the axial outside of the first insertion part 121. The first slinger extension part 125 extends radially outward from the first insertion part 121. The first slinger extension part 125 is formed in an annular shape.

The hub 10 is inserted into the first slinger 120, and the axial outside of the first slinger extension part 125 is in close contact with the flange insertion part 115 of the flange 11. The first slinger extension part 125 is spaced axially inward from the flange extension part 113.

The first slinger slope part 123 is formed between the first insertion part 121 and the first slinger extension part 125. The first slinger slope part 123 inclinedly extends to be axially outward from the first insertion part 121 and radially outward. The first slinger slope part 123 is formed between the first insertion part 121 and the first slinger extension part 125, thereby creating a space between the first slinger slope part 123 and the hub concave part 117.

The second slinger slope part 127 inclinedly extends to be axially inward from the radial outside of the first slinger extension part 125 and radially outward. The second slinger slope part 127 is formed to be away from the flange extension part 112 in the axial direction as moving radially outward. An inclination angle (θ) of the second slinger slope part 127 is preferably at 15° or more. The second slinger slope part 127 is located radially inward of the flange slope part 111 of the flange 11. The second slinger slope part 127 and the flange slope part 111 are formed inclined in opposite directions to each other.

The slinger extension part 129 is formed cylindrically. The slinger extension part 129 extends axially inward from the radial outside of the second slinger slope part 127. The slinger extension part 129 is radially spaced from the first insertion part 121.

The outer diameter surface of the slinger extension part 129 is spaced radially inward from the second outer ring inner diameter part 138 of the outer ring to form a first gap 151. The first gap 151 is formed axially.

A slinger end 1291 which is the axial inner end of the slinger extension part 129 is spaced axially outward from the outer ring jaw part 136 to form a second gap 153. The second gap 153 is formed radially.

The slinger extension part 129 may inclinedly extend radially outward from the radial outside of the second slinger slope part 127 so that the outer diameter is increased toward the end 1291.

In FIG. 3, "B" represents a radial extension line of the axial outer end of the outer ring 30. The radial extension line (B in FIG. 3) of the axial outer end of the outer ring 30 is located at a convex curved part formed between the second slinger slope part 127 and the slinger extension part 129.

Foreign substances flowing along the outer circumferential surface of the outer ring 30 falls into the convex curved part formed between the second slinger slope part 127 and the slinger extension part 129 when flowing radially inward (direction "C" in FIG. 3) after passing the axial outer end of the outer ring 30, and then, flows along the outer surface of the first slinger 120 and flows into the first space 152 formed between the flange extension part 113 and the first slinger 120. So, the flow of the foreign substances into the first gap 151 is inhibited. The first space 152 is formed to be wider radially outward.

An axial distance (E) from the flange extension part 113 to the radial outer end of the second slinger slope part 127 is preferably greater than 0.8 mm. The axial distance (E) from the flange extension part 113 to the radial outer end of the second slinger slope part 127 can be increased by providing the second slinger slope part 127, thus further inhibiting the flow of foreign substances into the first gap 151.

Additionally, as illustrated in FIG. 3, foreign substances such as water flowing radially inward along the inner surface of the flange 11 (direction "D" in FIG. 3) direct the second slinger slope part 127 axially inward while passing the flange slope part 111, and then direct axially outward at the second slinger slope part 127 to flow into the first space 152 formed between the flange 11 and the first slinger 120. The radial inner end of the flange slope part 111 is located at the same position as the outer diameter of the second slinger slope part 127 or radially inward of the second slinger slope part 127.

Therefore, the foreign substances flowing radially inward along the inner surface of the flange 11 is inhibited from flowing into the first gap 151.

The foreign substances entering the first space 152 is expelled downwards as the hub 10 rotates.

The second slinger 140 is provided in a ring shape. The second slinger 140 is made of a metal material. The second slinger 140 is inserted into the outer ring 30. The second slinger 140 is located axially inward of the first slinger 120. The second slinger 140 includes a second insertion part 141, a second slinger extension part 145, and a second slinger slope part 143.

The second insertion part 141 is formed cylindrically. The second insertion part 141 is press-fitted into the first outer ring inner diameter part 132 of the outer ring.

The second slinger extension part 145 extends radially inward from the axial outer side of the second insertion part 141. The second slinger extension part 145 is formed in an annular shape. The second slinger extension part 145 is spaced axially inward from the first slinger extension part 125 and faces the first slinger extension part 125.

The second slinger slope part 143 is formed between the second insertion part 141 and the second slinger extension part 145 in the radial direction. The second slinger slope part 143 inclinedly extends to be radially inward and axially outward from the second insertion part 141. The second slinger slope part 143 is formed to be away from the outer ring slope part 134 as moving axially outward. The second slinger slope part 143 is located radially inward of the outer ring slope part 134 of the outer ring 30. The second slinger slope part 143 and the outer ring slope part 134 are formed inclined in opposite directions to each other.

The seal body 130 is coupled to the axial outside of the second slinger 140. The seal body 130 is made of a material such as rubber. The seal body 130 includes one or more seal lips that is in contact with the first slinger 120.

The one or more seal lips protrude axially outward toward the first slinger 120 and extend circumferentially. The one or more seal lips are spaced in the radial direction.

In FIG. 2, reference numeral 131 indicates a seal lip which protrudes axially outward from the radial inside of the second slinger 140 and is in contact with the first slinger slope part 123, and 133 indicates a seal lip which is spaced from the seal lip 131 in the radial direction, and of which an end is in contact with the first slinger extension part 125.

The seal body 130 further includes a first seal lip 135 formed on the radial outside of the seal lips.

The first seal lip 135 extends axially outward from the radial outside of the seal lip 133, and then, extends radially outward to form a "U"-shaped second space 154 on the axial inside of the first seal lip 135. A third gap 155 is formed between the end of the first seal lip 135 and the slinger extension part 129. The third gap 155 is formed axially.

The axial inner end of the slinger extension part 129 is spaced axially inward of the end of the first seal lip 135 ("A" in FIG. 3). Therefore, foreign substances flowing through the first gap 151 and the second gap 153 is prevented from entering the second space 154 formed by the first seal lip 135 and directly moving toward the seal lips 133 and 131.

As illustrated in FIG. 3, an interval H1 of the first gap 151 is formed smaller than the interval H2 of the second gap 153 and the interval H3 of the third gap 155. Since the first gap 151 is directly communicated with the exterior, it is preferable for the first gap 151 to be formed as small as possible to prevent the ingress of external foreign substances.

If the intervals H2 and H3 of the second gap 153 and the third gap 155 are smaller than the interval H1 of the first gap 151, it causes tilting deformation of the hub 10 due to moment loads generated by vehicle turning and impacts, and the tilting deformation of the hub 10 may cause the inner end 1291 of the slinger extension part 129 and the second slinger slope part 127 to get in contact with the outer ring jaw part 136 and the first seal lip 135, thus causing damage to the slinger 120 and an increase in drag torque due to interference from the first seal lip 135.

It is preferable that the interval H2 of the second gap 153 is smaller than the interval H3 of the third gap 155.

If the interval H3 of the third gap 155 is smaller than the interval H2 of the second gap 153, the problem where the second slinger slope part 127 comes into contact with the first seal lip 135 before the inner end 1291 of the slinger extension part 129 comes into contact with the outer ring jaw part 136.

Therefore, it is preferable that the interval H1 of the first gap 151 is smaller than the interval H2 of the second gap 153, and the interval H2 of the second gap 153 is smaller than the interval H3 of the third gap 155.

The intervals H1, H2 and H3 of the first to third gaps 151, 153 and 155 are formed in the range of 0.4 to 0.8 mm. Preferably, the interval H1 of the first gap 151 ranges from 0.4 to 0.8 mm, the interval H2 of the second gap 153 ranges from 0.5 to 0.9 mm, and the interval H3 of the third gap 155 ranges from 0.6 to 1.0 mm.

If the interval of the gap is less than 0.4 mm, the first slinger 120 comes into contact with the outer ring 30 and the first seal lip 135 due to application of external loads, leading to an increase of torque due to damage to the slinger and interference from the seal lip. If the interval of the gap exceeds 1.0 mm, the path through which the external foreign substances enter becomes wider, reducing the labyrinth effect.

The seal body 130 may further include an outer ring contact part 137 protruding radially outward from the axial inside of the first seal lip 135.

The outer ring contact part 137 is coupled to the axial outer surface of the second slinger 140 inside the first seal lip 135. The outer ring contact part 137 is also coupled to the axial outer surface of the second slinger slope part 143 inside the first seal lip 135. The outer diameter of the outer ring contact part 137 is formed larger than the outer diameter of the second insertion part 141.

The outer ring contact part 137 prevents the foreign substances from entering between the first outer ring inner diameter part 132 and the second insertion part 141 of the second slinger 140 by coming into contact with the first outer ring inner diameter part 132 of the outer ring 30 when the second slinger 140 is assembled.

Additionally, on the outer ring 30, the outer ring slope part 134 is formed axially outward of the outer ring contact part 137, thereby enhancing the effect of discharging foreign substances that have entered the second space 154 through the second gap 153. It is preferable that the outer ring slope part 134 is formed with an inclination of at least 5 degrees.

If foreign substances penetrate through the first to third gaps 151, 153, and 155, they intrude sequentially through the axially formed first gap 151, the radially formed second gap 153, and the axially formed third gap 155.

Thus, the foreign substances flow inward in the axial direction and pass through the first gap 151, flow inward in the radial direction and pass through the second gap 153, and then, flow axially outward and pass through the third gap 155 to reach the seal lips 133 and 131, thereby preventing the ingress of the foreign substances to the axial inside of the sealing device 101.

Furthermore, if the slinger extension part 129 is formed to increase in outer diameter towards the end 1291 by extending radially outward from the radial outside of the second slinger slope part 127, the foreign substances that have entered the second space 154 through the gaps are guided along the inner surface of the radially outwardly inclined slinger extension part 129 to the second gap 153 when the hub 10 rotates, thereby being discharged more smoothly.

## Claims

1. A wheel bearing assembly comprising:
an outer ring, a hub, a plurality of rolling elements aligned circumferentially between the outer ring and the hub, and a sealing device provided at an outward opening formed between the outer ring and the hub,
wherein the sealing device includes a first slinger into which the hub is inserted, a second slinger which is inserted into the outer ring, and a seal body which includes one or more seal lips being in contact with the first slinger, and
wherein a first gap and a second gap of labyrinth are formed between the first slinger and the outer ring, and the seal body further includes a first seal lip formed on the radial outside of the seal lips to form a third gap between the first seal lip and the first slinger.

2. The wheel bearing assembly according to claim 1, wherein foreign substances pass sequentially through the first gap, the second gap, and the third gap, wherein the first gap is formed axially, the second gap is formed radially, and the third gap is formed axially.

3. The wheel bearing assembly according to claim 2, wherein the foreign substances flow axially inward and pass through the first gap, flows radially inward and pass through the second gap, and then, flow axially outward and pass through the third gap to reach the seal lip.

4. The wheel bearing assembly according to any one of claims 1 to 3, wherein the first slinger includes a first insertion part into which a hub outer diameter part is inserted, a first slinger extension part provided on the outside of the first insertion part and extending radially outward, a second slinger slope part inclinedly extending to direct inward from the first slinger extension part and radially outward, and a slinger extension part extending inward from the second slinger slope part,
wherein the second slinger includes a second insertion part inserted into a first outer ring inner diameter part, and a second slinger extension part extending radially inward from the outside of the second insertion part and spaced inwardly from the first slinger extension part to face the first slinger extension, and
wherein the seal body is coupled to the second slinger, the one or more seal lips protrude outward toward the first slinger, and the first seal lip extends outward from the radial outside of the seal lips and then extends radially outward to form the third gap between an end thereof and the slinger extension part.

5. The wheel bearing assembly according to any one of claims 1 to 3, wherein the outer ring includes a first outer ring inner diameter part into which the second slinger is inserted, an outer ring jaw part formed outwardly from the first outer ring inner diameter part, and a second outer ring inner diameter part being larger in diameter than the first outer ring inner diameter part on the outside of the outer ring jaw part,
wherein the first slinger includes a slinger extension part formed radially outward, and
wherein the first gap is formed between the second outer ring inner diameter part and an outer diameter part of the slinger extension part, and the second gap is formed between the outer ring jaw part and the inner end of the slinger extension part, so the first gap and the second gap form a curved gap.

6. The wheel bearing assembly according to claim 3, wherein the flange includes a flange slope part directing inward at a position facing the outer end of the outer ring and inclined radially outward, a flange extension part extending radially inward from the flange slope part, and a flange insertion part protruding inward with a step formed radially inward of the flange extension part,
wherein the first slinger extension is in close contact with the flange insertion part, and
wherein the second slinger slope part is located radially inward of the flange slope part, and the first slinger extension part is spaced axially inward from the flange extension.

7. The wheel bearing assembly according to claim 4, wherein the inner end of the slinger extension is positioned axially inward from the end of the first seal lip.

8. The wheel bearing assembly according to claim 3, wherein a radial extension line of the outer end of the outer ring is located at a convex curved part formed between the second slinger slope part and the slinger extension.

9. The wheel bearing assembly according to claim 3, wherein a first outer ring slope part which is inclined radially inward and axially outward is provided between the first outer ring inner diameter part and the outer ring jaw part of the outer ring.

10. The wheel bearing assembly according to claim 5, wherein an interval of the first gap is smaller than an interval of the second gap and an interval of the third gap.

11. The wheel bearing assembly according to claim 10, wherein the interval of the second gap is smaller than the interval of the third gap.

12. The wheel bearing assembly according to claim 11, wherein the interval of the first gap is smaller than the interval of the second gap and the interval of the second gap is smaller than the interval of the third gap, and
wherein the interval of the first gap ranges from 0.4 to 0.8 mm, the interval of the second gap ranges from 0.5 to 0.9 mm, and the interval of the third gap ranges from 0.6 to 1.0 mm.

13. The wheel bearing assembly according to claim 5, wherein the ratio of the thickness of the second outer ring inner diameter part from the outer circumferential surface of the outer ring to the thickness of the first outer ring inner diameter part from the outer circumferential surface of the outer ring is 0.25 ≤ G/F ≤ 0.7.
